# EUROPEAN PATENT APPLICATION

(11) **EP 4 752 803 A1**
(43) Date of publication of application: **03.06.2026**
(21) Application number: 24845328.4
(22) Date of filing: 02.07.2024
(51) Int. Cl.: G06Q 10/087

(54) **INVENTORY ANALYSIS DEVICE, INVENTORY ANALYSIS METHOD, AND INVENTORY ANALYSIS SYSTEM**

(30) Priority: 27.07.2023 JP 2023122464
(71) Applicant: Star Micronics Co., Ltd., Shizuoka-shi, Shizuoka 422-8654 (JP)
(72) Inventor: ISHIGAMI Yusuke, Shizuoka-shi, Shizuoka 422-8654 (JP); IDENO Katsuya, Shizuoka-shi, Shizuoka 422-8654 (JP); MASUDA Mitsuhiro, Shizuoka-shi, Shizuoka 422-8654 (JP); KASABA Yusuke, Shizuoka-shi, Shizuoka 422-8654 (JP)
(74) Representative: Grünecker Patent- und Rechtsanwälte PartG mbB
(86) International application number: PCT/JP2024/023888
(87) International publication number: WO 2025/022946

(57) **Abstract**

[Solution] Provided are an inventory index value acquisition unit 12 that acquires an inventory index value, which is an index value relating to the inventory status of a product, a sales index value acquisition unit 13 that acquires a sales index value, which is an index value relating to the sales status of the product, and an inventory identification unit 14 that identifies, as dead stock, inventory of a product for which the inventory index value is on a low evaluation side of an inventory threshold and the sales index value is on a low evaluation side of a sales threshold. By identifying the status of the inventory on the basis of not only the perspective of simply whether or not the inventory index value is on the low evaluation side of the inventory threshold but also the logical product thereof with the perspective of whether or not the sales index value is on the low evaluation side of the sales threshold, the inventory of a product for which the inventory index value and the sales index value both indicate low evaluation values can be identified as dead stock that needs to be dealt with preferentially, among the inventory.

## Description

### [Technical Field]

The present invention relates to an inventory analysis device, an inventory analysis method, and an inventory analysis system for analyzing the inventory status of a product.

### [Background Art]

Generally, a company invests funds in order to manufacture or purchase products, and obtains new funds by selling the products. Products that a company temporarily holds in order to sell become inventory. If inventory continues to accumulate, this means that the inventory is never converted into cash, and the company obtains no new operating funds. It is therefore important to be able to identify and sell inventory that has not been converted into cash, and particularly inventory of unsold, dead products (dead stock), as quickly as possible.

The existence of slow-moving inventory acts as future impairment losses, thereby becoming a factor profit reductions, and in consideration thereof, an information processing system that assists in suppressing the occurrence of slow-moving inventory in order to efficiently increase profits at a retail store has been proposed (for example, see PTL 1). In the information processing system described in PTL 1, the risk of inventory retention is determined on the basis of sales information about subject products at a store, sales information about subject products on an e-commerce site, and the inventory quantities of the subject products.

More specifically, in the information processing system described in PTL 1, an expected exhaustion period (an in-house sales exhaustion period) until the inventory quantity is sold out in a case where the target product is sold at the store is predicted, and an expected exhaustion period (a market sales exhaustion period) until the inventory quantity is sold out in a case where the target product is sold on the e-commerce site is predicted. Then, as shown in Fig. 3 of PTL 1, the risk of retention of the inventory of the target product at the present time is determined as one of a first rank to a fourth rank in accordance with a combination of the length of the in-house sales exhaustion period and the length of the market sales exhaustion period.

### [Citation List]

### [Patent Literature]

[PTL 1] Japanese Patent Application Publication No. 2021-33352

### [Summary of Invention]

### [Technical Problem]

According to the technology described in PTL 1, it is possible to ascertain the risk of inventory retention. However, the information processing system of the technology described in PTL 1 simply determines that the longer the sales exhaustion period (the inventory period), the higher the risk of inventory retention. Therefore, a problem exists in that the reason why the inventory period is long remains unknown, making it difficult to identify dead stock that needs to be dealt with preferentially.

The present invention has been designed in order to solve this problem, and an object thereof is to make it possible to identify dead stock that needs to be dealt with preferentially among inventory.

### [Solution to Problem]

To solve the above problem, in the present invention, an inventory index value, which is an index value relating to the inventory status of a product, is acquired, a sales index value, which is an index value relating to the sales status of the product, is acquired, and the inventory of a product for which the inventory index value is on a low evaluation side of an inventory threshold and the sales index value is on a low evaluation side of a sales threshold is identified as dead stock.

### [Advantageous Effects of Invention]

According to the present invention, configured as described above, the status of the inventory is identified on the basis of not only the perspective of simply whether or not the inventory index value is on the low evaluation side of the inventory threshold but also the logical product thereof with the perspective of whether or not the sales index value is on the low evaluation side of the sales threshold, and therefore, in contrast to a case in which the risk of inventory retention is determined simply by whether or not the inventory period is long, the inventory of a product for which the inventory index value and the sales index value both indicate low evaluation values can be identified as dead stock that needs to be dealt with preferentially, among the inventory.

### [Brief Description of Drawings]

[Fig. 1] Fig. 1 is a view showing an overall example configuration of an inventory analysis system to which an inventory analysis device according to an embodiment is applied.
[Fig. 2] Fig. 2 is a block diagram showing an example functional configuration of an inventory analysis server according to this embodiment.
[Fig. 3] Fig. 3 is a diagram showing an example of an inventory positioning map.
[Fig. 4] Fig. 4 is a diagram showing an example display of a details window.
[Fig. 5] Fig. 5 is a diagram showing an example display of a candidate measure window.
[Fig. 6] Fig. 6 is a diagram showing an example display of the candidate measure window.
[Fig. 7] Fig. 7 is a diagram showing an example display of the candidate measure window.
[Fig. 8] Fig. 8 is a diagram showing an example display of the candidate measure window.
[Fig. 9] Fig. 9 is a diagram showing an example display of the candidate measure window.
[Fig. 10] Fig. 10 is a diagram showing an example display of the inventory positioning map on which a change in the state of a symbol is visualized.
[Fig. 11] Fig. 11 is a flowchart showing an example operation of the inventory analysis server according to this embodiment.
[Fig. 12] Fig. 12 is a diagram showing another example display of the inventory positioning map.

### [Description of Embodiments]

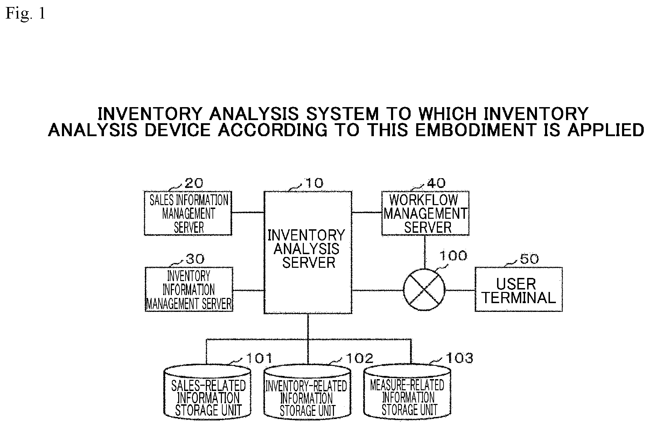

Hereinafter, an embodiment of the present invention will be described on the basis of the drawings. Fig. 1 is a diagram showing an overall example configuration of an inventory analysis system to which an inventory analysis device according to this embodiment is applied. As shown in Fig. 1, the inventory analysis system according to this embodiment includes an inventory analysis server 10 (corresponding to the inventory analysis device), a sales information management server 20, an inventory information management server 30, and a workflow management server 40. A sales-related information storage unit 101, an inventory-related information storage unit 102, and a measure-related information storage unit 103 are connected to the inventory analysis server 10. In addition, a user terminal 50 is connected to the inventory analysis server 10 and the workflow management server 40 via a communication network 100 such as the Internet or a mobile phone network. Connections other than the user terminal 50 may be realized using a LAN (Local Area Network) or a communication network such as the Internet or a mobile phone network.

The sales information management server 20 is a server for managing sales information for each product. When a product is sold at a certain store or on an e-commerce site, the sales information management server 20 records sales information including the product ID and product name of the product, the store ID and store name, the site ID, the sales date/time, the sales price, the sales quantity, and so on in a database (not shown) as a sales record.

The inventory information management server 30 is a server that manages inventory information for each product. In a case where store inventory is managed, when a product is delivered to a certain store, the inventory information management server 30 records delivery information including the product ID and product name of the product, the store ID and store name, the delivery date/time, the delivered quantity, and so on in a database (not shown) as a delivery record. Moreover, when a product is shipped from a certain store, the inventory information management server 30 records shipping information including the product ID and product name of the product, the store ID and store name, the shipping date/time, the shipped quantity, and so on in a database (not shown) as a shipping record.

Furthermore, in a case where warehouse inventory relating to products sold on an e-commerce site is managed, when a product is delivered to a certain warehouse, the inventory information management server 30 records warehouse delivery information including the product ID and product name of the product, the warehouse ID and warehouse name, the delivery date/time, the delivered quantity, and so on in a database (not shown) as a warehouse delivery record. Moreover, when a product is shipped from a certain warehouse, the inventory information management server 30 records warehouse shipping information including the product ID and product name of the product, the warehouse ID and warehouse name, the shipping date/time, the shipped quantity, and so on in a database (not shown) as a warehouse shipping record.

Although a configuration including the sales information management server 20 and the inventory information management server 30 is illustrated here, the present invention is not limited to this configuration, and any servers may be used as long as the sales information and inventory information of the product can be ascertained. For example, the sales information and inventory information of the product may be managed by a POS (Point of Sale) server installed in a store. Information relating to delivery and sale of the product, which may change at any time, is stored in the POS server, and the sales information and inventory information of the product can be ascertained from this information. In this case, the POS server doubles as the sales information management server 20 and the inventory information management server 30. Alternatively, the sales information and inventory information of the product may be managed by a WMS (Warehouse Management System) server used in a warehouse. Information relating to delivery and shipping of the product, which may change at any time, is stored in the WMS server, and the sales information and inventory information of the product on an e-commerce site can be ascertained from this information. In this case, the WMS server doubles as the sales information management server 20 and inventory information management server 30.

The workflow management server 40 executes processing relating to an approval workflow when executing measures, to be described below. More specifically, in this embodiment, a person having execution authority can be set for each measure, and when a certain measure is to be executed, the workflow management server 40 executes flow processing for obtaining the approval of the person having execution authority. Note that the approval workflow processing can be performed by applying a known technique, and specific description relating thereto has been omitted.

The user terminal 50 exchanges information with the inventory analysis server 10. For example, the user terminal 50 provides the inventory analysis server 10 with the information necessary when the inventory analysis server 10 executes processing. Further, the user terminal 50 acquires information about the results of the processing executed by the inventory analysis server 10 and displays the information on a screen of the user terminal 50. The details of this information exchange will be described below. Furthermore, the user terminal 50 exchanges information with the workflow management server 40 while processing relating to the approval workflow is executed. Detailed description thereof has been omitted.

The inventory analysis server 10 acquires the sales information and inventory information from the sales information management server 20 and the inventory information management server 30, and executes analysis processing relating to the product inventory using the acquired information. Note that when a core system (an ERP system) of a company is linked to the sales information management server 20 and the inventory information management server 30, the inventory analysis server 10 may acquire the sales information and inventory information from the core system. The inventory analysis server 10 may acquire the information periodically at each preset interval period, or may acquire the information at a timing at which an instruction to execute analysis processing is issued from the user terminal 50.

When executing the inventory analysis processing, the inventory analysis server 10 uses various information stored in the sales-related information storage unit 101, the inventory-related information storage unit 102, and the measure-related information storage unit 103. The information acquired from the sales information management server 20 and the inventory information management server 30 and information generated by the inventory analysis server 10 are stored in these storage units 101 to 103 in addition to preset information.

The sales-related information storage unit 101 stores, in addition to the sales information acquired from the sales information management server 20, a target value (for example, a target number of daily sales) set in advance in relation to a sales index value, to be described below, a target sales date, and a sales index value (for example, the average number of daily sales) for each product, acquired by the inventory analysis server 10. The target number of daily sales and the target sales date are information set by the user through an operation of the user terminal 50.

The inventory-related information storage unit 102 stores, in addition to the inventory information acquired from the inventory information management server 30, a target value (for example, a target number of days in stock) set in advance in relation to an inventory index value, to be described below, the unit cost of the product, the inventory management cost, the inventory disposal cost, and an inventory index value (for example, the number of days in stock) for each product, acquired by the inventory analysis server 10. The target number of days in stock, the unit cost of the product, the inventory management cost, and the inventory disposal cost are information set by the user through an operation of the user terminal 50.

The measure-related information storage unit 103 stores, in addition to a plurality of preset measure information, information such as executed measures, the execution dates of the measures, the number of times each measure has been executed, and the authority to execute the measures, this information being managed by the inventory analysis server 10. The plurality of measure information is information indicating measures presented as candidates to the user. The executed measures, the execution dates of the measures, and the number of times each measure has been executed are information in which measures implemented by the user, the execution dates thereof, and the number of times each measure was executed are recorded as a history. The authority to execute the measures is information set by the user through an operation of the user terminal 50.

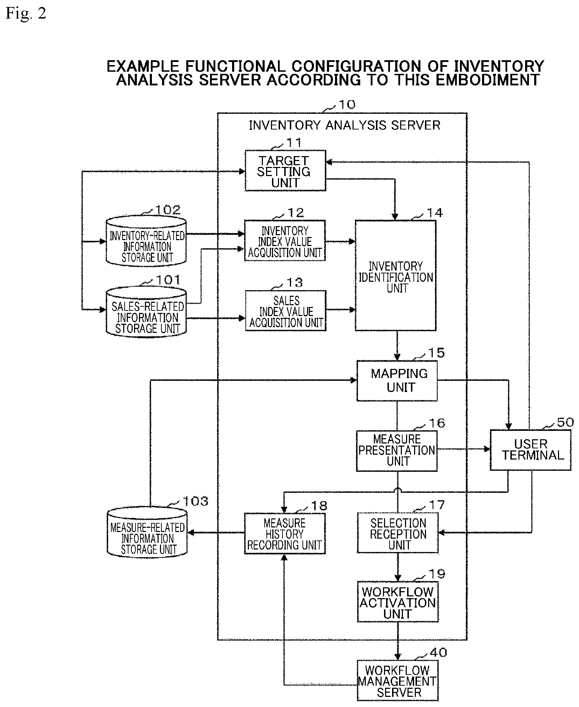

Fig. 2 is a block diagram showing an example functional configuration of the inventory analysis server 10. As shown in Fig. 2, the inventory analysis server 10 of this embodiment includes, as a functional configuration, a target setting unit 11, an inventory index value acquisition unit 12, a sales index value acquisition unit 13, an inventory identification unit 14, a mapping unit 15, a measure presentation unit 16, a selection reception unit 17, a measure history recording unit 18, and a workflow activation unit 19.

The above functional blocks 11-19 can be configured by any of hardware, a DSP (Digital Signal Processor), and software. For example, the functional blocks 11-19 are realized by operating a program stored in a storage medium such as a RAM, a ROM, a hard disk or a semiconductor memory under the control of a microcomputer configured to include a CPU, a RAM, a ROM, and so on.

The target setting unit 11 sets a target value relating to the inventory index value and a target value relating to the sales index value in response to an instruction from the user operating the user terminal 50. As described above, in this embodiment, the number of days in stock (a numerical value indicating the number of days of sales to which the number of products in stock held as inventory corresponds) is used as an example of the inventory index value. In this case, the target setting unit 11 sets a target value of the number of days in stock (the target number of days in stock). Furthermore, in this embodiment, the average number of daily sales is used as an example of the sales index value. In this case, the target setting unit 11 sets a target value of the average number of daily sales (the target number of daily sales).

The target setting unit 11 stores the set target values in the sales-related information storage unit 101 and the inventory-related information storage unit 102. Further, when an instruction to execute analysis processing is issued from the user terminal 50, the target setting unit 11 reads the target values from the sales-related information storage unit 101 and the inventory-related information storage unit 102 and provides the read target values to the inventory identification unit 14.

The inventory index value acquisition unit 12 acquires an inventory index value serving as an index value of the inventory status of a product. More specifically, the inventory index value acquisition unit 12 calculates the average daily sales value for each product on the basis of the sales information stored in the sales-related information storage unit 101, calculates a stock value corresponding to the inventory amount on the basis of the inventory information stored in the inventory-related information storage unit 102, and acquires the number of days in stock by dividing the stock value by the average daily sales value. Note that the inventory turnover period may be acquired instead of the number of days in stock. In this case, the average stock level for the period in which the inventory turnover period is to be determined may be divided by the average sales cost for the period. In addition, the inventory turnover period may be acquired by using the sales quantity for a predetermined period and the average inventory quantity for the period instead of on a monetary amount basis such as the sales value and the stock value.

The sales index value acquisition unit 13 acquires a sales index value serving as an index value of the sales status of a product. More specifically, the sales index value acquisition unit 13 calculates the average number of daily sales (the average number of sales per day) for each product on the basis of the sales information stored in the sales-related information storage unit 101. Note that the average daily sales value calculated by the inventory index value acquisition unit 12 may be calculated by the sales index value acquisition unit 13, and the calculated data may be acquired by the inventory index value acquisition unit 12.

Here, an example in which the inventory index value acquisition unit 12 calculates the inventory index value on the basis of the sales information stored in the sales-related information storage unit 101 and the inventory information stored in the inventory-related information storage unit 102, and the sales index value acquisition unit 13 calculates the sales index value on the basis of the sales information stored in the sales-related information storage unit 101 has been described, but the present invention is not limited to this example. For example, the inventory index value and the sales index value may be calculated in the sales information management server 20 and the inventory information management server 30 and stored in the sales-related information storage unit 101 and the inventory-related information storage unit 102, and the inventory index value acquisition unit 12 and the sales index value acquisition unit 13 may acquire the inventory index value and the sales index value from the sales-related information storage unit 101 and the inventory-related information storage unit 102.

The inventory identification unit 14 identifies the product inventory by classifying the inventory of each product into one of four types in accordance with a combination of whether or not the inventory index value is on the low evaluation side of an inventory threshold and whether or not the sales index value is on the low evaluation side of a sales threshold. In this embodiment, the target number of days in stock set by the target setting unit 11 in relation to the inventory index value is used as the inventory threshold. Further, the target number of daily sales set by the target setting unit 11 in relation to the sales index value is used as the sales threshold.

More specifically, the inventory identification unit 14 identifies the inventory of a product for which the number of days in stock acquired by the inventory index value acquisition unit 12 is shorter than the target number of days in stock and the average number of daily sales acquired by the sales index value acquisition unit 13 is smaller than the target number of daily sales as "inventory for which delivery is under consideration". A product classified as this type is a product with low inventory and low sales. Basically, this is considered to be a case in which sales have declined over time since the product was put on sale, and therefore the product is positioned as a product that requires consideration as to whether the remaining inventory should be left to sell out as is or whether sales will recover if the inventory is replenished.

Furthermore, the inventory identification unit 14 identifies the inventory of a product for which the number of days in stock acquired by the inventory index value acquisition unit 12 is shorter than the target number of days in stock and the average number of daily sales acquired by the sales index value acquisition unit 13 is larger than the target number of daily sales as "bestselling inventory". A product classified as this type is a product with low inventory and high sales. Basically, this is considered to be a case in which the product is likely to be a bestselling product, and therefore the product is positioned as a product for which replenishment should be considered in order to avoid lost opportunities due to running out of stock.

Moreover, the inventory identification unit 14 identifies the inventory of a product for which the number of days in stock acquired by the inventory index value acquisition unit 12 is longer than the target number of days in stock and the average number of daily sales acquired by the sales index value acquisition unit 13 is smaller than the target number of daily sales as "dead stock". A product classified as this type is a product with high inventory and low sales. Basically, this is considered to be a case in which the product is likely to be a dead product, and therefore the product is positioned as a product for which a measure for converting the product into cash in order to prevent loss should be considered.

Furthermore, the inventory identification unit 14 identifies the inventory of a product for which the number of days in stock acquired by the inventory index value acquisition unit 12 is longer than the target number of days in stock and the average number of daily sales acquired by the sales index value acquisition unit 13 is larger than the target number of daily sales as "market inventory". A product classified as this type is a product with high inventory and high sales. Basically, since sales are healthy, the product is positioned as a product for which progress is to be monitored in order to determine if the inventory can be exhausted by the target sales date. A product is often classified as this type when the inventory is replenished while sales continue to grow.

The mapping unit 15 generates a map by plotting symbols corresponding to a plurality of products on a 4-quadrant segment map corresponding to the four classification types on the basis of the inventory index values of the plurality of products, acquired by the inventory index value acquisition unit 12, and the sales index values of the plurality of products, acquired by the sales index value acquisition unit 13. The generated map is then provided to the user terminal 50. Hereinafter, the map generated by the mapping unit 15 will be referred to as an "inventory positioning map".

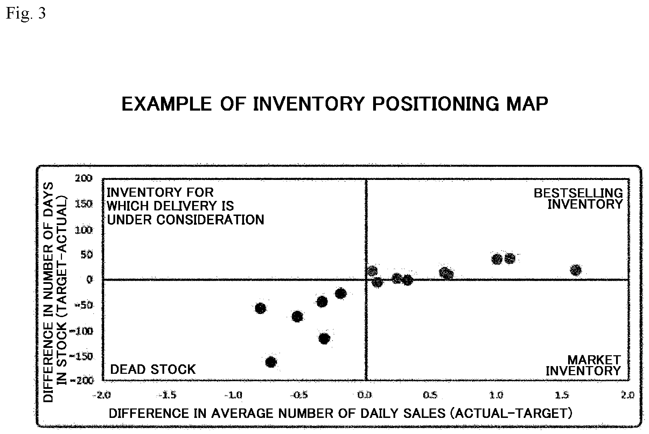

Fig. 3 is a diagram showing an example of the inventory positioning map. In the example of Fig. 3, a 4-quadrant segment map is configured by drawing, on a two-dimensional map on which the vertical axis represents the difference in the number of days in stock, obtained by subtracting the actual number of days in stock from the target number of days in stock, and the horizontal axis represents the difference in the average daily sales, obtained by subtracting the target number of daily sales from the actual average number of daily sales, boundary lines in a position where the difference in the number of days in stock = 0 on the vertical axis and a position where the difference in the average number of daily sales = 0 on the horizontal axis. A plurality of symbols denoted by circles represent individual products and are plotted in coordinate positions of (difference in the average number of daily sales, difference in the number of days in stock), calculated from the inventory index value, the sales index value, the target number of days in stock, and the target number of daily sales of each product.

When the inventory positioning map is configured as shown in Fig. 3, the inventory of the products placed in the first quadrant on the upper left is "inventory for which delivery is under consideration", the inventory of the products placed in the second quadrant on the upper right is "bestselling inventory", the inventory of the products placed in the third quadrant on the lower left is "dead stock", and the inventory of the products placed in the fourth quadrant on the lower right is "market inventory".

On the basis of the inventory positioning map displayed on the user terminal 50, the user can easily identify products for which the inventory is to be dealt with preferentially. More specifically, since it is possible to identify not only dead stock that needs to be dealt with preferentially but also bestselling inventory, it is possible to also consider the need to replenish the products of the bestselling inventory.

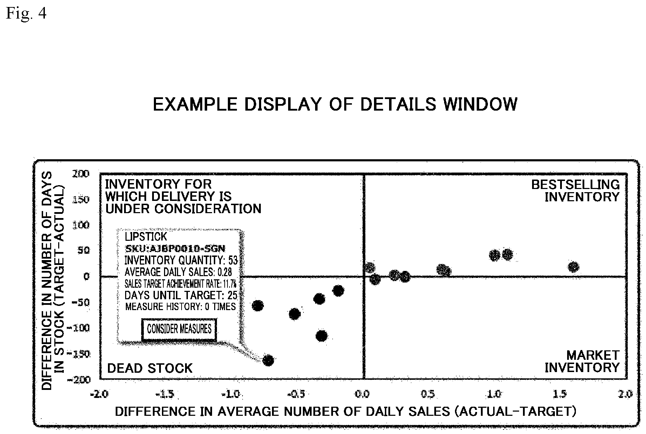

As shown in Fig. 4, the mapping unit 15 may display detailed information about a product corresponding to a selected symbol as a pop-up when the user performs an operation to select a desired symbol. The detailed information about the product includes any information extracted from among the sales information, the inventory information, the inventory index value, the sales index value, the measure execution history, and so on. Hereinafter, a window in which the pop-up is displayed will be referred to as a "details window".

The measure presentation unit 16 presents candidates of measures for improving at least one of the inventory index value and the sales index value with respect to the inventory identified as a dead stock by the inventory identification unit 14. The content of the presented candidate measures is set in advance in the measure-related information storage unit 103 as measure information. In other words, the measure presentation unit 16 acquires the measure information from the measure-related information storage unit 103, and presents candidate measures to the user terminal 50 on the basis thereof.

In the inventory positioning map, the products of the dead stock placed in the third quadrant at the bottom left are inventory that is lying dormant without generating cash, and if this inventory is left dormant as is, the company may be adversely affected thereby. More specifically, the following adverse effects may occur.
The products fill the warehouse or the backyard area of the store, making it more difficult to perform product stocking work in the warehouse and the backyard area of the store. Since the work becomes more difficult, the time required to perform the work increases, making it impossible to do other work at the warehouse and reducing the time spent with customers at the store, which leads to sales.
Storage costs are incurred in order to store the products in the warehouse. The longer the products continue to be stored, the more the storage costs increase, leading to a reduction in the company profits.
The products deteriorate over time simply by being stored. Therefore, the products cannot be stored indefinitely and must be disposed of if they deteriorate. Disposing of the products means not only that the unit cost of the product is wasted but also that additional disposal costs are incurred.

Therefore, products placed in the dead stock area on the stock positioning map must be converted into cash as quickly as possible in order to reduce company losses. Accordingly, the measure presentation unit 16 presents to the user terminal 50 candidate measures necessary for converting the inventory identified as dead stock by the inventory identification unit 14 into cash.

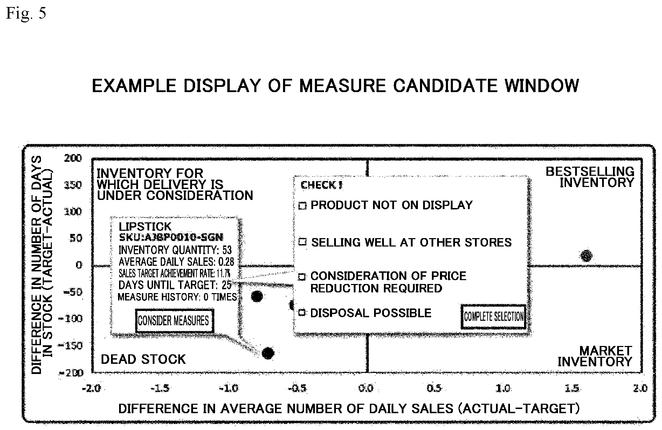

Figs. 5 to 9 are diagrams showing examples of the presentation of candidate measures. In the example shown in Fig. 5, when an operation is performed to select a measure consideration button existing in the details window displayed as a pop-up when a desired symbol is selected, a list of candidate measures is displayed as a pop-up. Hereinafter, the window displayed as a pop-up in this manner will be referred to as a "candidate measure window".

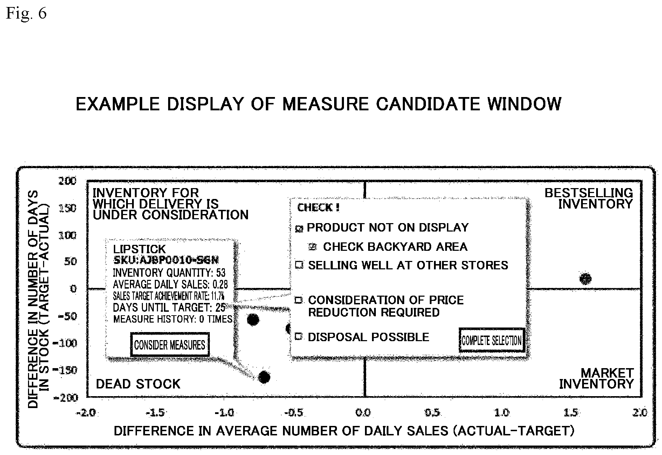

In the example of the candidate measure window shown in Fig. 5, four items, namely checking the product display (written as "product not on display"), checking the sales status at other stores (written as "selling well at other stores"), checking the possibility of a price reduction (written as "consideration of price reduction required"), and checking the possibility of disposal (written as "disposal possible"), are presented as candidate measures. The user selects one of the four candidate measures. When one of the candidate measures is selected, the measure presentation unit 16 presents more specific examples of measures and information on materials for consideration in relation to the selected candidate measure, as shown in Figs. 6 to 9.

The first measure shown in Fig. 5, namely "checking the product display", is a measure for checking whether or not a product identified as dead stock being displayed properly. In a store, a product may be left in the backyard area and not put out on display. Therefore, checking whether the product display is in a state in which the product can actually be sold is presented as a candidate measure. When the first candidate measure is selected, the measure presentation unit 16 presents checking whether the product has been left in the backyard area as a specific example measure, as shown in Fig. 6.

The second measure shown in Fig. 5, namely "checking the sales status at other stores", is a measure for checking whether or not the same product as the product identified as dead stock at a host store is selling well at other stores. Checking the sales status of the product at other stores is presented as a candidate measure that can be taken when the product is being displayed properly but sales are not going as well as desired. When it has been confirmed that the same product is on sale at other stores, it is possible to check if there are any measures that can be taken to increase sales at the host store by referring to measures implemented at the other stores.

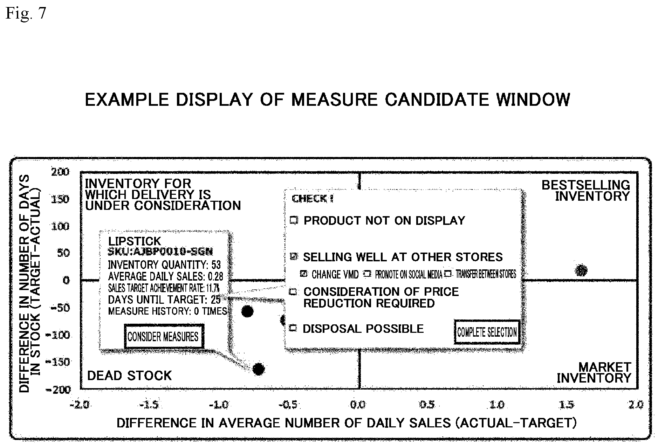

When the second candidate measure is selected, the measure presentation unit 16 presents three specific example measures, namely changing the VMD (visual merchandising), promoting the product on social media, and transferring the product between stores, as shown in Fig. 7. Changing the VMD is a measure for imitating the method of displaying the product at a store where the product is selling well, for example. Promoting the product on social media is a measure for imitating the method by which social media are used at a store where the product is selling well. Transferring the product between stores is a measure for considering transferring the product between stores when there is no material to be imitated. Transferring the product between stores is an effective measure when the inventory at other stores is being exhausted at a steady rate or when the inventory is low. Note that when an e-commerce site exists, this measure also includes transferring the inventory to the e-commerce site.

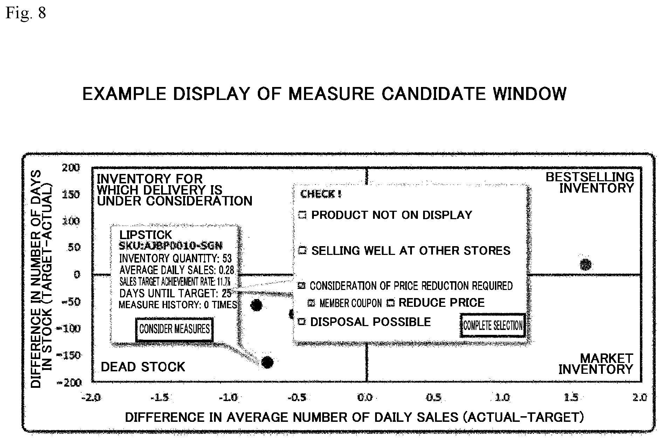

The third measure shown in Fig. 5, namely "checking the possibility of a price reduction", is a measure for considering reducing the price of a product identified as dead stock. Checking whether or not the price of the product should be reduced in order to sell the remaining inventory is presented as a candidate measure that can be taken when the product is being displayed correctly but sales are also unfavorable at other stores or when it is impossible to move the product to another store. When the third candidate measure is selected, the measure presentation unit 16 presents, as concrete example measures, a method of distributing memberexclusive coupons so as to implement a price reduction in a closed environment and a method of selling the product at a predetermined discount, as shown in Fig. 8.

The fourth measure shown in Fig. 5, namely "checking the possibility of disposal", is a measure for considering disposing of a product identified as dead stock. As described above, when a dead stock product is retained indefinitely, the company may be adversely affected thereby. Therefore, checking whether or not the product should be disposed of is presented as a candidate measure that can be taken when it is considered difficult to sell the remaining inventory by reducing the price.

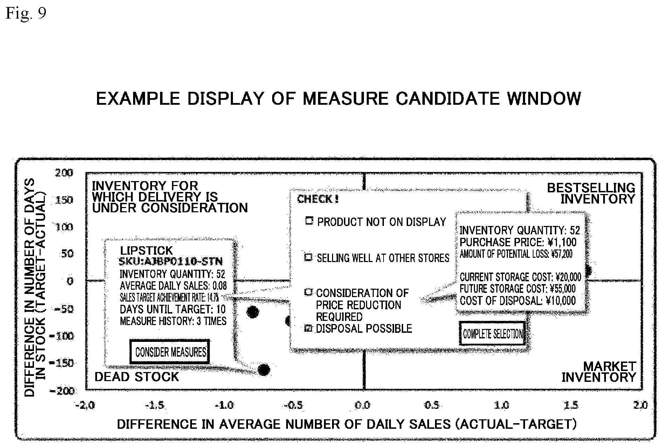

Fig. 9 shows an example screen displayed when the fourth measure, namely "checking the possibility of disposal", is selected. In the example screen shown in Fig. 9, the amount of the potential losses if the inventory is retained as is and the disposal fee that will be incurred if the inventory is disposed of are presented. The amount of the potential losses indicates the required storage cost for the storage period if a specific product continues to be kept in stock as is. The storage period can be set as desired by the user, and a disposal period (the sales deadline to be described below, or the like) determined for each product can be set as the storage period.
Note that when the cost of storage at the warehouse is determined by the used area (or the contracted area) of the warehouse, the storage cost of a specific product can be calculated by, for example, computing the area required to dispose the specific product in the warehouse from the size of the product, and calculating the percentage of the area of the warehouse occupied by the product. By visualizing the amount of the potential losses and the disposal fee in this manner, it is possible to determine whether or not it is better to dispose of the product at present.

The user selects and executes any of the candidate measures (including the specific example measures) presented as shown Figs. 5 to 9. As shown in Figs.. 6 to 9, a measure is selected by placing a tick in a checkbox and operating a selection completion button. The selection reception unit 17 receives the selection of the measure selected by the user in the manner described above. Thereafter, once the user has executed the selected measure, the user inputs information such as the name and execution date of the measure and the person in charge of execution from the user terminal 50, and transmits the information to the inventory analysis server 10 as measure execution report information.

The measure history recording unit 18 records the measure selected and executed by the user from among the candidates presented by the measure presentation unit 16 (the measure received by the selection reception unit 17) and the execution date in the measure-related information storage unit 103 as measure history information. In other words, the measure history recording unit 18 records the measure selected by the user (when the measure requires approval, the approved measure) in the measure-related information storage unit 103. Then, when the measure execution report information is sent from the user terminal 50, at least the execution date is recorded in the measure-related information storage unit 103 in association with the name of the selected measure. Note that the information included in the measure execution report information may be recorded in addition to the name and execution date of the measure.

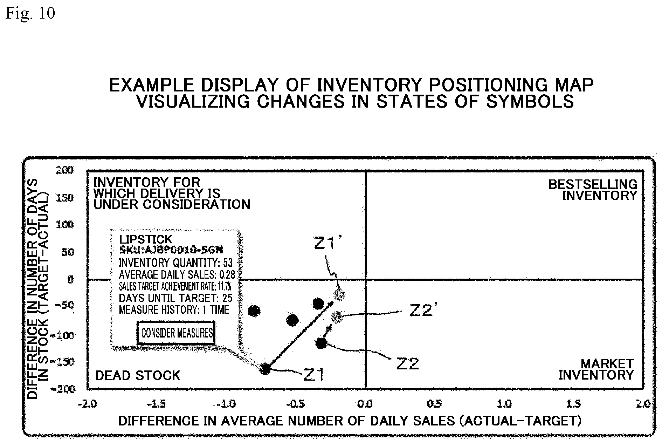

The mapping unit 15 may visualize and display a change in the state of the symbol plotted on the inventory positioning map for the inventory of the product for which a measure has been executed on the basis of the inventory index value and sales index value prior to the execution date and the inventory index value and sales index value after the execution date. Fig. 10 is a diagram showing an example display of the inventory positioning map visualizing changes in the state of the symbols. In Fig. 10, arrows indicate that as a result of implementing measures on products corresponding to two symbols Z1 and Z2, the positions of the symbols have changed to positions of symbols Z1' and Z2'.

By generating the inventory positioning map again after the execution date of the measure, the user can ascertain how the positioning on the map has changed with respect to the inventory for which the measure was executed. The user can check whether or not the measure has been effective by checking the change in the positioning. Basically, if the arrow points to the upper right, it can be determined that the inventory index value and sales index value have approached the respective target values thereof, or in other words that the inventory status and sales status have improved, and therefore that the measure has been effective. On the other hand, if the arrow does not point to the upper right, it can be determined that the measure was not effective or that the effect thereof was weak. In this case, the user selects and executes another measure through the candidate measure window shown in Fig. 5.

Note that when the inventory positioning map is generated after executing a measure, it is also possible to extract and map only the products determined as dead stock. Fig. 10 shows an example of such a display.
Alternatively, only products for which measures have been executed may be extracted and mapped. Alternatively, the products may be filtered and mapped according to the measure (for example, only products whose VMD has been changed, only products for which coupons have been distributed, and so on). Filtering and mapping the products according to the measure makes it easier for the user to identify tendencies indicating which measures are more effective. By collecting data on the effects of the measures, it is also possible to measure which measures are effective in what situations, and to use this information for future measure execution. In this case, it is possible to evaluate all of the measures for which the arrow points to the upper right as "effective". Alternatively, only measures corresponding to arrows having a length not less than a predetermined value, among the arrows pointing to the upper right, may be evaluated as "effective". The present invention is not limited thereto, and the definition of "effective" can be set as desired. Measures evaluated as "effective" are recognized as having an effect.

It is desirable for the user to be able to determine who will be given the authority to execute each of the measures. In this embodiment, information relating to the authority to implement the candidate measures presented by the measure presentation unit 16 can be set in the user terminal 50, whereupon the set information can be transmitted to the inventory analysis server 10 and recorded in the measure-related information storage unit 103. The information relating to implementation authority is information indicating who has the authority to implement which measure.

When the user selects one of the measures from among the candidates (when the selection reception unit 17 receives a selection of a measure), the workflow activation unit 19 activates the workflow management server 40 in order to execute an approval workflow corresponding to the implementation authority set for the selected measure. Thus, when the user selects one of the measures and the measure requires approval, the approval workflow of the workflow management server 40 is automatically activated. For example, when a salesperson selects the price reduction measure from the sales and inventory statuses of the product, a price reduction proposal workflow is automatically routed to a superior, thereby making it possible to determine whether or not to allow a price reduction through a predetermined approval route. When the selected measure is approve for execution, information indicating the name of the measure is stored in the measure-related information storage unit 103 by the measure history recording unit 18.

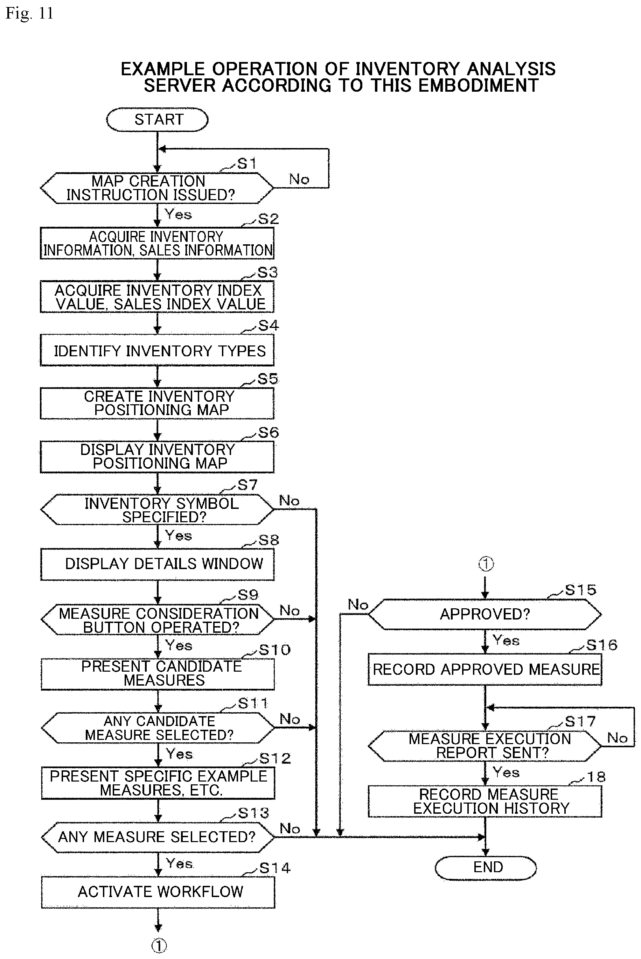

Fig. 11 is a flowchart showing an example operation of the inventory analysis server 10 according to this embodiment, configured as described above. Note that it is assumed that the target number of daily sales and the target number of days in stock have already been set before executing the flowchart of Fig. 11.

In Fig. 11, the inventory analysis server 10 determines whether or not an instruction to create an inventory positioning map has been issued from the user terminal 50 (step S1). When a creation instruction has been issued, the inventory index value acquisition unit 12 acquires the inventory information from the inventory-related information storage unit 102, and the sales index value acquisition unit 13 acquires the sales information from the sales-related information storage unit 101 (step S2).
Next, the inventory index value acquisition unit 12 calculates the number of days in stock as the inventory index value for each product, and the sales index value acquisition unit 13 calculates the number of daily sales as the sales index value for each product (step S3).

Next, the inventory identification unit 14 identifies the product inventory by classifying the product inventory into the four types (inventory for which delivery is under consideration, bestselling inventory, dead stock, and market inventory) in accordance with a combination of whether the number of days in stock is greater than the target number of days in stock and whether the average number of daily sales is smaller than the target number of daily sales.(step S4). Further, the mapping unit 15 generates an inventory positioning map on which symbols corresponding to a plurality of products are represented on four quadrant areas corresponding to the four classification types on the basis of the differences between the number of days in stock and the target number of days in stock and the average number of daily sales and the target number of daily sales of the plurality of products (step S5), and displays the map on the user terminal 50 (step S6).

At this time, the mapping unit 15 determines whether there is a product for which a measure has been executed by referring to the measure history information in the measure-related information storage unit 103. If there is a product for which a measure has been executed, the change in the state of the symbol plotted on the inventory positioning map is visualized and displayed on the basis of the inventory index value and sales index value before the measure execution date and the inventory index value and sales index value after the measure execution date. Note that the change in the state of the symbol may be displayed only when the user performs a predetermined operation on the user terminal 50.

Here, the mapping unit 15 determines whether or not an operation to select one of the symbols on the inventory positioning map has been performed (step S7). When an operation to select a symbol has not been performed, the processing of the flowchart shown in Fig. 11 is terminated. When, on the other hand, an operation to select one of the symbols has been performed, the mapping unit 15 displays the details window indicating detailed information about the product corresponding to the selected symbol as a pop-up, as shown in Fig. 4 (step S8).

Next, the measure presentation unit 16 determines whether or not an operation to select the measure consideration button in the details window has been performed (step S9). When an operation to select the measure consideration button has not been performed, the processing of the flowchart shown in Fig. 11 is terminated. When, on the other hand, an operation to select the measure consideration button has been performed, the measure presentation unit 16 displays the candidate measure window as a pop-up, as shown in Fig. 5 (step S10).

Here, the measure presentation unit 16 determines whether or not one of the candidate measures has been selected from the candidate measure window (step S11). When a candidate measure has not been selected, the processing of the flowchart shown in Fig. 11 is terminated. When, on the other hand, a candidate measure has been selected, more specific example measures and information on materials for consideration are presented in relation to the selected candidate measure, as shown in Figs. 6 to 9 (step S12).

Next, the selection reception unit 17 determines whether or not one of the measures has been selected (step S13). When a measure has not been selected, the processing of the flowchart shown in Fig. 11 is terminated. When, on the other hand, one of the measures has been selected, the workflow activation unit 19 activates the workflow management server 40 in order to execute the approval workflow corresponding to the execution authority set for the selected measure (step S14).

Next, the measure history recording unit 18 inquires of the workflow management server 40 as to whether or not execution of the measure has been approved in the approval workflow (step S15). Here, when the workflow management server 40 reports that approval for executing the measure has not been obtained, the processing of the flowchart shown in Fig. 11 is terminated. Note that the processing may proceed to step S10 in this case. When, on the other hand, the workflow management server 40 reports that execution of the measure has been approved, the measure history recording unit 18 records the approved measure in the measure-related information storage unit 103 as measure history information (step S16). Note that if implementation authority has not been set for the selected measure, the processing of steps S14 and S 15 is skipped and the processing proceeds to step S16.

Next, the measure history recording unit 18 determines whether or not measure execution report information has been sent from the user terminal 50 (step S17). When the measure execution report information has been sent, the information on the execution date included therein is recorded in the measure-related information storage unit 103 as the measure history information of the selected measure (step S18). Thus, the processing of the flowchart shown in Fig. 11 is completed.

As described above in detail, in this embodiment, an inventory index value (the number of days in stock) relating to the inventory statuses of a plurality of products is acquired, a sales index value (the average number of daily sales) relating to the sales statuses of the plurality of products is acquired, and the inventory of a product for which the inventory index value is on the evaluation side of an inventory threshold (the target number of days in stock) and the sales index value is on the low evaluation side of a sales threshold (the target number of daily sales) is identified as dead stock.

According to this embodiment, configured in this manner, the inventory status is identified on the basis of not only the perspective of whether or not the inventory index value is on the low evaluation side of the inventory threshold but also the logical product thereof with the perspective of whether or not the sales index value is on the low evaluation side of the sales threshold, and therefore, in contrast to a case in which the risk of inventory retention is determined only by whether or not the inventory period is long, the inventory of a product for which the inventory index value and the sales index value both indicate low evaluation values can be identified as dead stock that needs to be dealt with preferentially among the inventory.

Furthermore, in this embodiment, since the inventory threshold and the sales threshold used to identify dead stock are set as target values relating to the inventory index value and the sales index value, dead stock can be identified according to whether or not the inventory index value and the sales index value have lower evaluations than the respective target values. Then, by presenting candidate measures for a product identified as dead stock, it is possible to support bringing at least one of the inventory index value and the sales index value closer to the target value.

In addition, according to this embodiment, the product inventory is identified by being classified into four types, whereupon an inventory positioning map on which symbols corresponding to a plurality of products are represented on a 4-quadrant segment map corresponding to the four classification types is generated and presented to the user. Thus, a product identified as dead stock can be easily identified at a glance. At the same time, inventory for which delivery is under consideration, best-selling inventory, and market inventory can also be identified easily, making it easier for the user to respond by considering the measures that are necessary for each thereof and so on.

Moreover, in this embodiment, candidate measures for improving at least one of the inventory index value and the sales index value are presented in relation to dead stock, which needs to be dealt with particularly preferentially.
This makes it easier for the user to consider measures for converting the dead stock into cash. Furthermore, in this embodiment, when the user executes a measure, an inventory positioning map visualizing the change in the positioning of the symbol before and after the measure execution date is generated and displayed, making it possible to check whether the measure has been effective.

Note that in the above embodiment, an example in which the number of days in stock or the inventory turnover period is used as the inventory index value was described, but the present invention is not limited thereto. For example, the inventory quantity, the inventory value, the inventory turnover rate, or the like may be used as the inventory index value. Furthermore, in the above embodiment, an example in which the average number of daily sales is used as the sales index value was described, but the present invention is not limited thereto. For example, the sales value of the product, the amount of gross profit, the proper-price sales rate (a ratio of the quantity/value sold at the regular price without reductions or the like to the quantity/value purchased), or the like may be used as the sales index value.

Alternatively, whether or not a sales deadline set for the product is near may be used as the sales index value. For example, in the case of food, the best before date or the expiration date can be set as the sales deadline. For seasonal products such as clothing, the end of the season (for example, the end of February or the like in the case of winter products) can be set as the sales deadline. Products that are close to the sales deadline but have a large inventory are likely to remain unsold. In the case of food, expiration of the deadline may be directly related to disposal. Therefore, for example, the number of days remaining until the sales deadline may be set as the sales index value, and the inventory of a product for which the sales index value is on the low evaluation side of the sales threshold and the inventory index value is on the low evaluation side of the inventory threshold may be identified as dead stock.

Further, when generating the inventory positioning map, the user can change the period for which the average number of daily sales is calculated as desired. For example, the average number of daily sales may be calculated by specifying a period from the day the product goes on sale (the day on which the product is delivered to the store) to the point at which the inventory positioning map is generated. Alternatively, the average number of daily sales may be calculated by specifying a period such as one month or one week before the map is generated. By generating the inventory positioning map with a variable subject period, long-term and recent transitions can be specified and checked as desired.

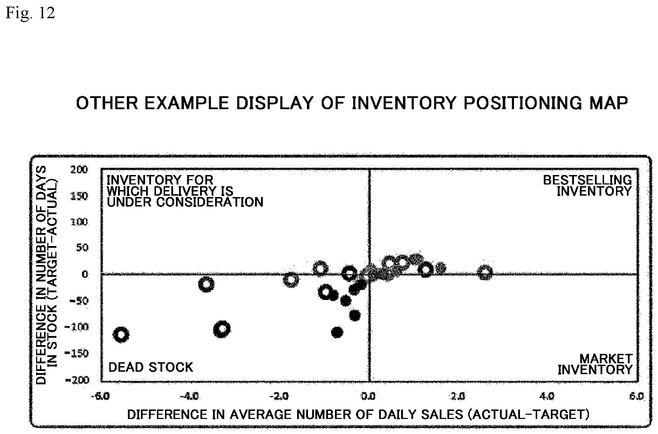

Furthermore, the processing of the inventory identification unit 14 and the mapping unit 15 may be executed separately for a case in which the inventory of products sold at a store is stored in the backyard area of the store and a case in which the inventory of products sold on an e-commerce site is stored in a warehouse. Alternatively, as shown in Fig. 12, a combination of symbols related to store inventory and symbols related to warehouse inventory may be displayed on the inventory positioning map so that both sets of symbols are visually distinguishable from each other. In Fig. 12, the filled circular symbols denote store inventory and the non-filled circular symbols denote warehouse inventory.

By generating the inventory positioning map in this manner, it is possible to compare and examine the distribution of the inventory types for products related to sales at stores and the distribution of the inventory types for products related to sales on e-commerce sites. It is also possible to examine the inventory status through a comparison between the status of store sales and the overall sales status, a comparison between the status of sales on e-commerce sites and the overall sales status, and so on, for example by identifying products that are not selling well at stores but selling well overall, products that are selling well on e-commerce sites but not selling well overall, and so on.

In addition, although the products displayed in the details windows of Figs. 4 to 10 are displayed in SKUs (stock keeping units, a unit for counting the minimum number of items in stock management), the product unit is not limited to SKUs. For example, each SKU may be classified into categories having a plurality of levels, and the category may be displayed as the product unit. Thus, similar products can be handled in units of groups, and the inventory status of each group can be ascertained.

Furthermore, in the above embodiment, an example in which an inventory positioning map on which symbols are represented at coordinate positions determined on the basis of the inventory index values and sales index values of a plurality of products is generated and presented was described, but the present invention is not limited thereto. In other words, it is not essential to present the four types of inventory identified by the inventory identification unit 14 in the form of an inventory positioning map. For example, the products may be displayed on separate lists for each inventory type. However, generating and presenting an inventory positioning map is preferable over displaying lists since the inventory status can be ascertained more intuitively. In particular, as the number of products increases, it becomes easier to ascertain the inventory status by using an inventory positioning map. Moreover, when generating the inventory positioning map, by additionally superimposing a display of an approximation formula calculated on the basis of the coordinate positions of the plurality of products, for example, and analyzing the distance between a coefficient of the approximation formula or the approximation formula and the coordinate position of a desired product or the like, it becomes easier to ascertain the inventory status more intuitively, select products that need to be dealt with preferentially, consider measures to be implemented, and set targets when implementing the measures.

Meanwhile, when a list is displayed, the candidate measures may also be displayed, and the measure to be implemented this time may be selected from the list. Further, the measure execution report information may be input from the list after the measure has been executed, and measures implemented in the past may be displayed on the list.
In the case of a list, by inputting the measure execution report information from the list, the input work is easier than when the measure execution report information is input from the details window for each product. In addition, filtering can be performed according to the measure, making it easier to identify products for which the same measure has been executed.

Furthermore, in the above embodiment, an example in which the product inventory is identified by being classified into four types in accordance with a combination of whether or not the inventory index value is on the low evaluation side of the inventory threshold and whether or not the sales index value is on the low evaluation side of the sales threshold was described, but the present invention is not limited thereto. For example, it is possible to identify only dead stock that needs to be dealt with particularly preferentially In other words, the inventory identification unit 14 may be configured to only identify the inventory of a product in which the inventory index value is on the low evaluation side of the inventory threshold and the sales index value is on the low evaluation side of the sales threshold as dead stock.

In addition, in the above embodiment, an example in which information about the candidate measures presented by the measure presentation unit 16 is determined in advance was described, but the present invention is not limited thereto. For example, the content of the presented candidate measures may be changed in accordance with the coordinate positions on the inventory positioning map, specified on the basis of the inventory index value and the sales index value. Furthermore, for products for which measures have been executed, the content of the presented candidate measures may be changed in accordance with the manner (for example, the directions and sizes of the arrows shown in Fig. 10) in which the coordinate positions on the inventory positioning map, specified on the basis of the inventory index values and the sales index values, change before and after the execution date of the measure. Furthermore, the effects of past measures may be measured in the manner described above, and measures that are expected to be more likely to be effective based on the measured results may be displayed preferentially. For example, measures that are evaluated as being "effective" may be displayed preferentially as measures that are expected to be more likely to be effective. When a plurality of candidate measures are displayed, displaying a measure preferentially indicates a display method that is easier for the user to see, such as displaying the candidate measure at the top or emphasizing the characters by displaying the characters in bold or highlighting the characters.

Furthermore, in the above embodiment, changes in the state of the symbols are visualized in Fig. 10, and when a changed symbol is selected, checkboxes in which the user can select the effect of the measure may be displayed as details windows. In the checkboxes, items such as "large effect", "medium effect", and "small effect" are prepared, and the user selects a checkbox on the basis of the degree of the change in the state of the symbol. The selection result is transmitted to the measure-related information storage unit 103 and stored as effect evaluation information in association with the name of the executed measure and so on. As a result, measures executed in the past and the effects thereof are stored as measure history information in the measure-related information storage unit 103. The measure presentation unit 16 may analyze the degree of effectiveness of the measures executed in the past on the basis of the evaluation information stored as the measure history information in the measure-related information storage unit 103, and display the measures calculated to be highly effective preferentially. A highly effective measure can be, for example, a measure for which the "large effect" item has been selected. Alternatively, an evaluation value may be set for each of large effect, medium effect and small effect, a score may be calculated using a predetermined function on the basis of an evaluation value selected for each of a case in which a certain measure has been executed a plurality of times and a case in which a certain measure has been executed on a plurality of products, and when the score is equal to or higher than a threshold, the certain measure may be evaluated as a highly effective measure.
Note that as well as allowing the user to input the effect using a checkbox, the level of the effect may be determined automatically on the basis of the movement amount (the inclination amount and length of the arrow) of the change in the state of the symbol in Fig. 10.

Furthermore, when analyzing the levels of effects of measures executed in the past, the target of the analysis may be selected from an individual product unit, a product group unit combining a plurality of similar products, and an all-product unit including all of the handled products. In addition, the effects may be scored, and the size of the score may be used as the determination criterion. In this case, the scores for measures having the effect of coming closer to the target values may be set higher, or the measures may be scored in accordance with the lengths of the arrows directed toward the center point. Furthermore, weights of the measures may be changed for a single product or a group of products. The reason for this is that the effects of the measures may differ due to differences in the products, and it is therefore thought to be effective to take the most appropriate measures for a single product or a group of products.

Furthermore, in the above embodiment, an example in which candidate measures are presented only for product inventory identified as dead stock was described, but in addition thereto, candidate measures may also be presented for products classified as inventory for which delivery is under consideration, bestselling inventory, and market inventory. In this case, with respect to the four types of inventory classified by the inventory identification unit 14, candidate measures for bringing at least one of the inventory index value and the sales index value closer to the target value (bringing the position in which the symbol is disposed on the inventory positioning map closer to the coordinate position of the center) may be presented. In addition, since the market inventory is large, the inventory may become dead stock if sales decrease. Therefore, if sales are decreasing and the number of days in stock is showing an increasing trend, a warning may be issued. Furthermore, regarding bestselling inventory, when the arrow is pointed leftward after a state change such as that shown in Fig. 10, the inventory may become inventory for which delivery is under consideration, and accordingly a warning may be issued.

Changing the target value may be included as one of the candidate measures for bringing the index values closer to the target values. For example, if the symbols of the plurality of products arranged on the inventory positioning map are distributed mostly in the upper right area as a whole, it is considered that the target value relating to the inventory index value and the target value relating to the sales index value may both be set lower than appropriate values. On the contrary, if the symbols of the plurality of products arranged on the inventory positioning map are distributed mostly in the lower left area as a whole, it is considered that the target value relating to the inventory index value and the target value relating to the sales index value may both be set higher than appropriate values. Furthermore, if the symbols of the plurality of products are distributed mostly in the upper areas, the lower areas, the left areas, or the right areas as a whole, it is considered that one of the target value relating to the inventory index value and the target value relating to the sales index value may be set higher or lower than an appropriate value. In such cases, changing the target value is also presented as one of the candidate measures.

Moreover, in the above embodiment, the inventory threshold and the sales threshold are each set, but these thresholds may be set at a plurality of levels. For example, by preparing two inventory thresholds (a value indicating a level that requires attention and a value at which an immediate response is required) and two sales thresholds (a value indicating a level that requires attention and a value at which an immediate response is required), the number of inventory types classified by the inventory identification unit 14 is 8. By subdividing the types, the candidate measures can also be subdivided in accordance with the types, and as a result, more suitable candidate measures can be presented to the user.

Furthermore, in the above embodiment, an example in which a target value set in relation to the inventory index value and a target value set in relation to the sales index value are used as the inventory threshold and the sales threshold was described, but the present invention is not limited thereto. For example, values statistically calculated for the product (for example, average values or the like) may be used as the inventory threshold and the sales threshold.

Moreover, in the above embodiment, the measure presentation unit 16, the measure history recording unit 18, and the workflow activation unit 19 are not essential components, and any one or more thereof may be omitted.

In addition, the above embodiment merely illustrates a specific example of implementation of the present invention, and the technical scope of the present invention is not to be interpreted as being limited thereby. In other words, the present invention can be implemented in various forms without departing from the spirit or the main features thereof.

### [Reference Signs List]

- 10: Inventory analysis server (inventory analysis device)
- 11: Target setting unit
- 12: Inventory index value acquisition unit
- 13: Sales index value acquisition unit
- 14: Inventory identification unit
- 15: Mapping unit
- 16: Measure presentation unit
- 17: Selection reception unit
- 18: Measure history recording unit
- 19: Workflow activation unit
- 20: Sales information management server
- 30: Inventory information management server
- 40: Workflow management server
- 50: User terminal
- 101: Sales-related information storage unit
- 102: Inventory-related information storage unit
- 103: Measure-related information storage unit

## Claims

1. An inventory analysis device comprising:
an inventory index value acquisition unit that acquires an inventory index value, which is an index value relating to the inventory status of a product;
a sales index value acquisition unit that acquires a sales index value, which is an index value relating to the sales status of the product; and
an inventory identification unit that identifies, as dead stock, inventory of a product for which the inventory index value is on a low evaluation side of an inventory threshold and the sales index value is on a low evaluation side of a sales threshold.

2. The inventory analysis device according to claim 1, wherein
the inventory threshold is a target value set in relation to the inventory index value, and
the sales threshold is a target value set in relation to the sales index value.

3. The inventory analysis device according to claim 1 or 2, wherein the inventory identification unit identifies the inventory of the product by classifying the inventory into one of four types in accordance with a combination of whether or not the inventory index value is on the low evaluation side of the inventory threshold and whether or not the sales index value is on the low evaluation side of the sales threshold.

4. The inventory analysis device according to claim 3, further comprising a mapping unit that generates a map on which a symbol corresponding to the product is represented on a 4-quadrant segment map corresponding to the four types of classifications on the basis of the inventory index value and the sales index value of the product.

5. The inventory analysis device according to claim 1 or 2, further comprising a measure presentation unit that presents candidate measures for improving at least one of the inventory index value and the sales index value with respect to the inventory identified as the dead stock by the inventory identification unit.

6. The inventory analysis device according to claim 3, wherein
the stock threshold is a target value set in relation to the inventory index value, and
the sales threshold is a target value set in relation to the sales index value,
the inventory analysis device further comprising a measure presentation unit that presents candidate measures for bringing at least one of the inventory index value and the sales index value closer to the target value in relation to the four types of inventory classified by the inventory identification unit.

7. The inventory analysis device according to claim 4, further comprising:
a measure presentation unit that presents candidate measures for improving at least one of the inventory index value and the sales index value with respect to the inventory identified as the dead stock by the inventory identification unit; and
a measure history recording unit that records, as a history, a measure that has been selected by the user from among the candidates presented by the measure presentation unit and executed, and the execution date thereof, wherein
the mapping unit visualizes and displays change in the state of the symbol plotted on the segment map with respect to the inventory of the product for which the measure was executed on the basis of the inventory index value and the sales index value before the execution date and the inventory index value and the sales index value after the execution date.

8. The inventory analysis device according to claim 5, further comprising a measure history recording unit that records, with respect to a measure that has been selected by the user from among the candidates presented by the measure presentation unit and executed, the existence or the degree of an improvement in at least one of the inventory index value and the sales index value as evaluation information relating to the effect of the measure, wherein the measure presentation unit analyzes levels of the effects of measures executed in the past on the basis of the evaluation information stored by the measure history recording unit, and preferentially displays candidate measures with which a larger effect is likely to be obtained.

9. The inventory analysis device according to claim 7, further comprising a measure history recording unit that records, with respect to a measure that has been selected by the user from among the candidates presented by the measure presentation unit and executed, the existence or the degree of an improvement in at least one of the inventory index value and the sales index value as evaluation information relating to the effect of the measure, wherein
the measure history recording unit records evaluation information input by the user on the basis of the change in the state of the symbol displayed on the segment map by the mapping unit, and
the measure presentation unit analyzes levels of the effects of measures executed in the past on the basis of the evaluation information stored by the measure history recording unit, and preferentially displays candidate measures with which a larger effect is likely to be obtained.

10. The inventory analysis device according to claim 9, wherein the measure presentation unit calculates a score using a predetermined function on the basis of the evaluation information stored by the measure history recording unit, and preferentially displays measures having scores equal to or higher than a threshold as candidate measures with which a larger effect is likely to be obtained.

11. The inventory analysis device according to claim 7, wherein the measure presentation unit analyzes levels of the effects of measures executed in the past on the basis of the change in the state of the symbol, and preferentially displays candidate measures with which a larger effect is likely to be obtained.

12. The inventory analysis device according to claim 8, wherein the measure presentation unit analyzes the levels of the effects of the measures executed in the past in units selected from an individual product unit, a product group unit combining a plurality of similar products, and an all-product unit including all handled products.

13. The inventory analysis device according to claim 5, wherein information relating to implementation authority is set for the candidate measures presented by the measure presentation unit,
the inventory analysis device further comprising a workflow activation unit that, when any of the measures is selected by the user from among the candidates, activates an approval workflow corresponding to the implementation authority set for the selected measure.

14. An inventory analysis method comprising:
a step for causing an inventory index value acquisition unit and a sales index value acquisition unit of a computer to acquire an inventory index value, which is an index value relating to the inventory status of a product, and to acquire a sales index value, which is an index value relating to the sales status of the product; and
a step for causing an inventory identification unit of the computer to identify, as dead stock, inventory of a product for which the inventory index value is on a low evaluation side of an inventory threshold and the sales index value is on a low evaluation side of a sales threshold.

15. An inventory analysis system comprising:
an inventory index value acquisition unit that acquires an inventory index value, which is an index value relating to the inventory status of a product;
a sales index value acquisition unit that acquires a sales index value, which is an index value relating to the sales status of the product; and
an inventory identification unit that identifies, as dead stock, inventory of a product for which the inventory index value is on a low evaluation side of an inventory threshold and the sales index value is on a low evaluation side of a sales threshold.
